# EUROPEAN PATENT APPLICATION

(11) **EP 2 472 411 A1**
(43) Date of publication of application: **04.07.2012**
(21) Application number: 11189491.1
(22) Date of filing: 17.11.2011
(51) Int. Cl.: G06F 13/40

(54) **SAS expander connection routing techniques**

(30) Priority: 31.12.2010 US 983080
(71) Applicant: LSI Corporation, Milpitas, CA 95035 (US)
(72) Inventor: Patel, Sidheshkumar R., 411006 Pune, Maharashtra (IN); Kadam, Prasad Ramchandra, 411006 Pune, Maharashtra (IN); Aphale, Abhijit Suhas, 411006 Pune, Maharashtra (IN)
(74) Representative: Williams, David John

(57) **Abstract**

Disclosed are techniques for allowing an increase in topology size of a serial attached SCSI expander network, as well as limiting entries in content addressable memory that are used to store address locations relating to the system topology. In accordance with one method, addresses are provided in the OAF request to reduce lookup table entries. In accordance with another embodiment, address ranges are provided in the lookup table. In addition, virtual memory techniques are used, so that either a software lookup process can be used, or a hardware process can be used, so that only the most recently used addresses are stored in the lookup table.

## Description

### BACKGROUND OF THE INVENTION

Serial attached SCSI (SAS) is a computer bus that is used to move data to and from computer storage devices, such as hard drives and tape drives. SAS depends on point to point serial protocol. Typical serial attached SCSI systems include an initiator, which is a device that originates service and requests for processing by a target device and receives responses for these requests from the target devices. An initiator may comprise a controller or host device. Targets are devices containing logical units and target ports that receive device service and task management requests for processing, and send responses for the same requests to initiator devices. Target devices may comprise a hard disk or disk array. Expanders are devices that facilitate communication between the SAS devices and facilitate the connection of multiple SAS end devices.

### SUMMARY OF THE INVENTION

An embodiment of the present invention may therefore comprise a method of reducing the number of entries in a lookup table of an expander that is used in a serial attached SCSI storage system to provide routing addresses in response to an open address frame request for data comprising: providing routing information in the open address request comprising: source expander identification; source physical address information; destination expander identification; and, destination physical address information; using the routing information in the lookup table to route data between an initiator and a target.

An embodiment of the present invention may further comprise a method of reducing the number of entries in a lookup table of an expander that is used in a serial attached SCSI storage system to provide routing addresses in response to an open address frame request for data comprising: providing routing information in the open address frame request comprising, source expander address information; and, destination expander address information; using the routing information in the lookup table to route data between an initiator and a target.

An embodiment of the present invention may further comprise a process of reducing the number of entries in a lookup table of an expander that is used in a serial attached SCSI storage system that has a given topology to provide routing addresses in response to an open address frame request for data comprising: generating SAS address ranges for physical addresses of devices that exist in the topology of the storage system; storing the SAS address ranges in a lookup table; examining destination SAS addresses of the open address frame request to determine address range information of the addresses of the open address frame request; using the address range information of the addresses of the open address frame request to retrieve a physical layer index for routing to the devices.

An embodiment of the present invention may further comprise a method of reducing the number of entries in a lookup table of an expander that is used in a serial attached SCSI storage system that has a given topology to provide routing addresses in response to an open address frame request for data comprising: running a discovery routine to obtain the routing addresses for the topology of the storage system; storing the routing addresses in additional RAM; populating a lookup table with the routing addresses that are most recently used; reading the open address frame request; comparing address information contained in the open address frame request with the routing addresses stored in the lookup table; providing the routing addresses for routing the open address frame request when the routing addresses stored in the lookup table match the address information contained in the open address frame request; accessing the additional RAM when the routing addresses stored in the lookup table do not match the address information contained in the open address frame request; comparing the address information contained in the open address frame request with the routing addresses stored in the additional RAM; providing the routing addresses for routing the open address frame request when the routing addresses stored in the additional RAM match the address information contained in the open address frame request.

### BRIEF DESCRIPTION OF THE DRAWINGS

Figure 1 is a schematic block diagram illustrating one embodiment of a topology of the storage system.

Figure 2 is a work flow diagram of one embodiment for a connection request.

Figure 3 is a work flow diagram of one embodiment of a response to a connection request.

Figure 4 is an example of one embodiment of table entries.

Figure 5 is a flow diagram of one embodiment of a process for using lookup table address ranges.

Figure 6 is a block diagram of a lookup table for providing address ranges.

Figure 7 is a flow diagram for performing a virtual lookup process.

### DETAILED DESCRIPTION OF THE PREFERRED EMBODIMENTS

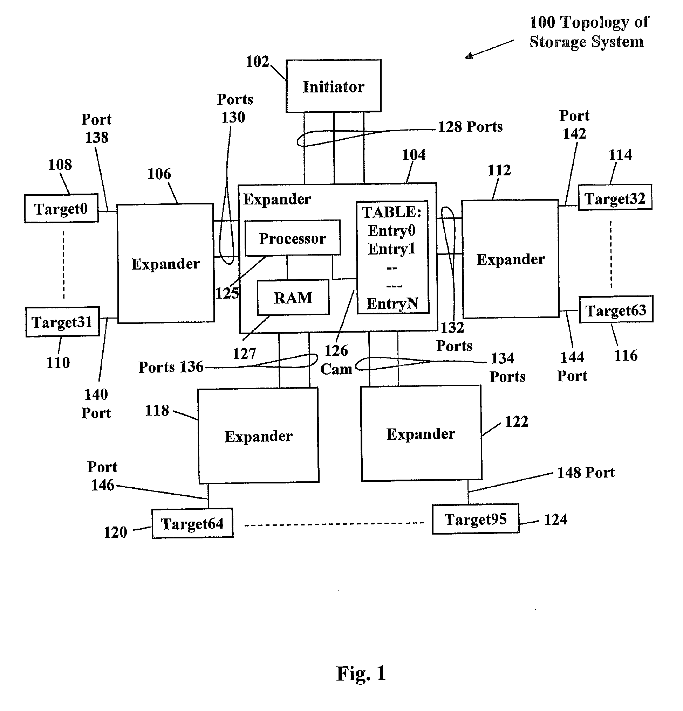

Figure 1 is a schematic block diagram illustrating one embodiment of an exemplary topology of a storage system 100. As shown in Figure 1, an initiator 102 may initiate requests for data from targets 108, 110, 114, 116, 120, 124 using a request command which is referred to as an open address frame or OAF. The OAF contains a source address, i.e., the address of the initiator 102, as well as the destination SAS address, which is the address of the target. Expander 104 receives the OAF request and refers to a lookup table, which is typically a content addressable memory (CAM), such as table 126. Table 126 provides the routing addresses for accessing data from a target. Expander 104 first checks to see if a target is directly connected to expander 104. If a target is not directly attached to expander 104, expander 104 refers to table 126 to obtain the routing data to the target. In prior art devices, the table 126 includes one routing entry for each destination SAS address. Since expander 104 may have up to 256 different ports, and each of the expanders 106, 112, 118, 122 may each have up to 256 ports, the lookup table 126 may have numerous entries. Access time, as well as cost in storing the information in table 126, comprise disadvantages of prior art techniques. If an additional layer of expanders is connected to expanders 106, 112, 118, 122, which can each have up to 256 ports, this causes the table entries to increase exponentially. Reducing the number of entries in table 126 can advantageously decrease processing time and expenses related to the amount of CAM memory required to be placed on the processing chip of the expander 104.

Rather than having an entry that includes a destination SAS address that specifies the port identifier of the SAS port to which a connection is being requested and a source SAS address field that specifies the port identifier of the SAS port that originated the open address frame, such as initiator 102, the OAF "Destination SAS Address" fields can be modified. For example, the OAF request from initiator 102 can include the routing information, such as the source expander ID, source physical address ID, the destination expander ID and the destination port ID. For example, the OAF request may be stated as:
DestinationSasAddr == {SrcExpID, SrcPhyID, DestExpID, DestPhyID} == {[Byte 11 ... Byte 10], [Byte 9 ... Byte 8], [Byte 7 ... Byte 6], [Byte 5 ... Byte 4]}

In this case, the field of SrcExpID contains the value of the index assigned to the expander on which the source port is directly attached. In this case, the source is initiator 102, and the expander is expander 104. The field of SrcPhyID has a value of the physical address on which the source port is directly attached, i.e., one of the ports 128. Field DestExpID contains a value of the index assigned to the expander on which the destination port is directly attached. For example, if the destination is target 114 (target32), the expander is expander 112. The field DestPhyID has a value of the port on which the destination is attached, i.e., port 142.

Since there are 64 bits that are allocated for the destination addressing in the existing OAF, eight bytes having 8 bits for use in the OAF for addressing. These bytes are indicated above as bytes 11-4, as indicated above.

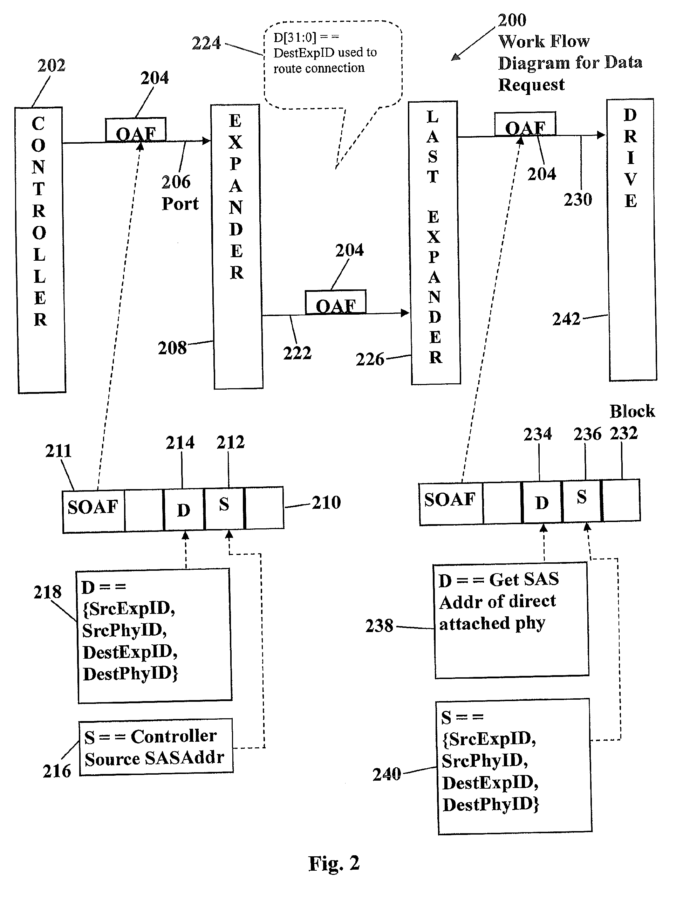

Figure 2 illustrates a work flow diagram 200 for a data request from initiator 102. As illustrated in Figure 2, controller 202, which may comprise the initiator 102 of Figure 1, initiates an OAF request 204. The OAF is a block of bytes 210, which includes a preview set of bytes SOAF 211, as well as a source controller address 216 that forms a section 212 of block 210, and destination addresses 218 that form a section 214 of the block 210. The OAF request 204 is transmitted over port 206 to expander 208. For example, expander 208 may comprise expander 104 illustrated in Figure 1. Expander 208 uses the destination expander ID, as indicated at 224, to transmit the OAF 204 over port 222 to the last expander 226. The last expander 226 utilizes the destination physical address from sectors 214, which indicates that port 230 is connected to drive 242. The last expander 226 modifies OAF 204, as indicated in block 232 before OAF 204 is sent to drive 242 on port 230. Drive 242 then stores the OAF request 204, so that the drive 242 has the proper addresses for returning data to controller 202.

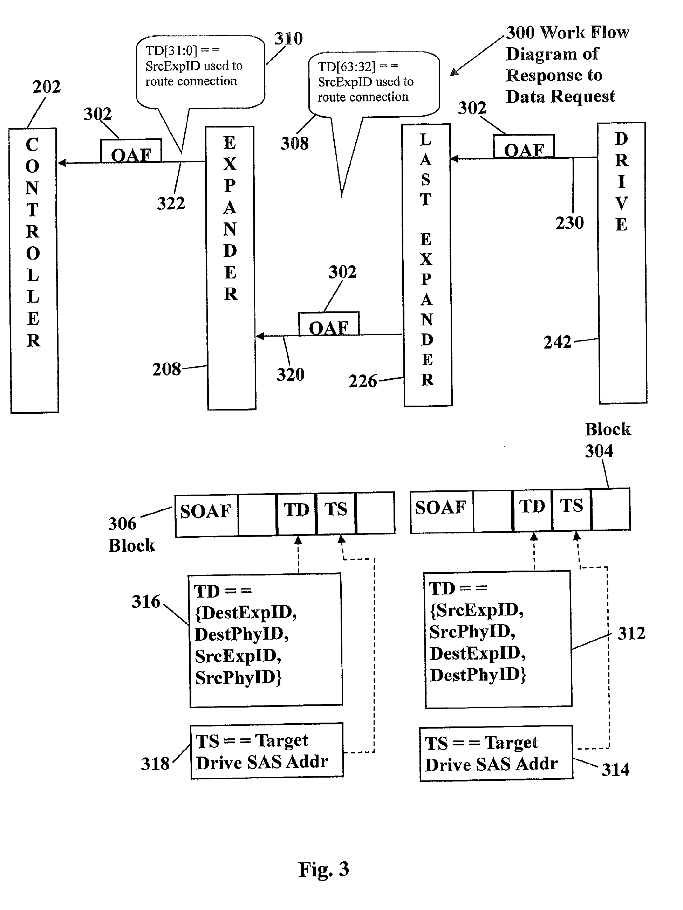

Figure 3 is a work flow diagram 300 of a response by a target. As shown in Figure 3, drive 242 generates OAF 302. OAF 302 includes a block 304. The target destination 312 provides a source expander ID, a source physical ID, a destination expander ID and a destination physical ID. The target source data 314 comprises the target drive SAS address. This information is used by the controller 202 to ensure that controller 202 knows that the response is from drive 242. The OAF 302 is transmitted over port 230 to last expander 226. Last expander 226 modifies OAF 302, as indicated in block 306, and then transmits the OAF 302 over port 320 to expander 208. The OAF includes block 306, that includes a target destination sector 316, that includes the destination expander ID, the destination physical ID, the source expander ID and the source physical ID address. Sector 318 includes the target source drive SAS address. Expander 208 utilizes the source expander ID to route OAF 302 over port 322 to the controller 202. Using the methods that are illustrated in Figures 2 and 3, the number of entries in the table 126 is reduced from the number of end device SAS addresses, which may be as many as 1,000 addresses or more, to the number of expander index addresses, which typically is around 50 or less in any given topology. This increases the speed at which data can be accessed, as well as reducing the cost of CAM that is included in the expander processor chips.

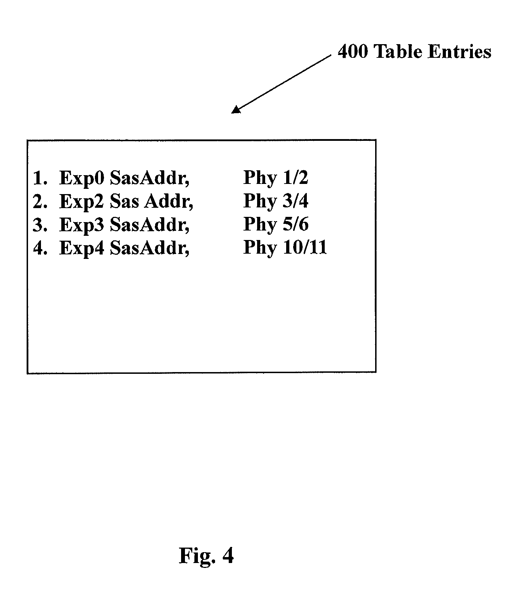

An alternative method of reducing table entries in table 126 is illustrated in Figure 4. In accordance with this embodiment, two new fields are added to the existing OAF format. The two new fields are source expander SAS address and destination expander SAS address. The source expander SAS address specifies the expander to which the source port is directly connected. In the embodiment of Figure 1, the source expander SAS address is the address of expander 104. The destination expander SAS address specifies the expander to which the destination port is directly connected. For example, if the destination is target 114, the destination expander SAS address is the address of expander 112. Of course, the field for these addresses is 0 if the initiator 102 has a port 128 that is connected directly to a destination target. Expander 104 first checks whether the destination SAS address in the OAF matches the SAS address of any direct attached target. If the addresses match then the connection shall be routed to the specified attached target port. If the addresses do not match, then expander 104 will use the destination expander SAS address specified in the OAF to perform a lookup from CAM.

Accordingly, list of addresses in the table entries are addresses of the expanders, rather than the targets. For example, rather than having a target SAS address, the table will include the physical address of the last expander to which the target is directly connected, as the destination expander SAS address, and the address of the expander to which the initiator is connected. For example, if the target is target 114 and the initiator is initiator 102, as shown in Figure 1, the address of the expander 112 is used as a destination expander SAS address and the address of expander 104 is used as the source expander SAS address. Using this method, the number of entries in table 126 is greatly reduced since the addresses are reduced to simply the number of last expanders, rather than the total number of targets.

Another alternative method for reducing the entries in table 126 is to use the data fields of the OAF "MORECOMPATIBLEFEATURE," which comprises bytes 24-27, to include address information in the OAF. A physical layer that receives an OAF ignores the "MORECOMPATIBLEFEATURE" field ("FEATURE field"). The more compatible feature field specifies additional features that are incompatible with previous versions of the standard. Since, in most topologies, there are very few initiators and expanders, and most of the devices are target drives, to take advantage of this fact, the FEATURE field of the OAF can be used to provide addition information. When the FEATURE field is set to 0, the OAF is normal, as defined in the SAS-2 specification. When the FEATURE field is set to 1, the MORECOMPATIBLEFEATURE [7:0] field value indicates the Phy number, or port number of the destination expander to which the connection should be routed. If the FEATURE field is set to 1 and the destination SAS address in OAF matches the SAS address of the expander, such as expander 112, then expander 112 knows to route the connection directly to the Phy number indicated in the MORECOMPATIBLEFEATURE [7:0]field, which is a direct connection of the target to the expander 112. If there are intermediate expanders present, entries in the table 126 will be routed to the connection of the specified destination address, which is SAS address of last expander.

The entries in the routing table 126, in accordance with this method, will include initiator SAS addresses and expander SAS addresses for the entire topology. Using this method, the number of entries in the routing table 126 will be greatly reduced, since the number of initiators and number of expanders is much less than the number of targets or end devices in most topologies, by at least an order of magnitude.

In accordance with the second and third disclosed method, the expander SAS addresses and the destination Phy number, or port number, can be used to route connections through a given topology instead of using destination target SAS addresses. One method has been shown for achieving that result, but any process that provides the expander SAS address, along with the destination port number or destination SAS address in the OAF request, is certainly within the scope of this invention.

In accordance with the first method, an expander identifier, along with a destination port number , can be used to route a connection in any given topology instead of using the destination target SAS address. Two methods have been shown, but any method for providing an expander identifier, along with a destination port number, is within the scope of this invention.

As indicated above, existing table based routing mechanisms for SAS expanders have one routing entry per each SAS address. Whenever an open address frame (OAF) request is received on an incoming port having a specified address, such as one of the ports 128 of expander 104, expanders perform a content addressable memory lookup in table 126, or some similar process, to find the outgoing physical address to which the OAF should be routed. Since the tables have one entry per SAS address, the number of table entries in table 126 that is needed to cover the topology of a storage access system increases linearly with the size of the topology.

Another method of reducing the number of entries in the content addressable memory table 126 is to specify a range of SAS addresses that are routed to a particular phy. For example, if Phy 0 is configured to reach SAS address range
5006 05b0 0002 72bf-PHY0 ROUTE SAS ADDRESS RANGE START
To
5006 05b0 0003 72bf- PHYO ROUTE SAS ADDRESS RANGE END
then all incoming OAFs targeted for a destination within the SAS address range, as set forth above, will be routed to Phy 0, which will eliminate a significant number of routing entries. Since the static lookup time in the table 126, or similar device, is proportional to the size of the table entries, address ranges reduce the number of entries by the size of the range.

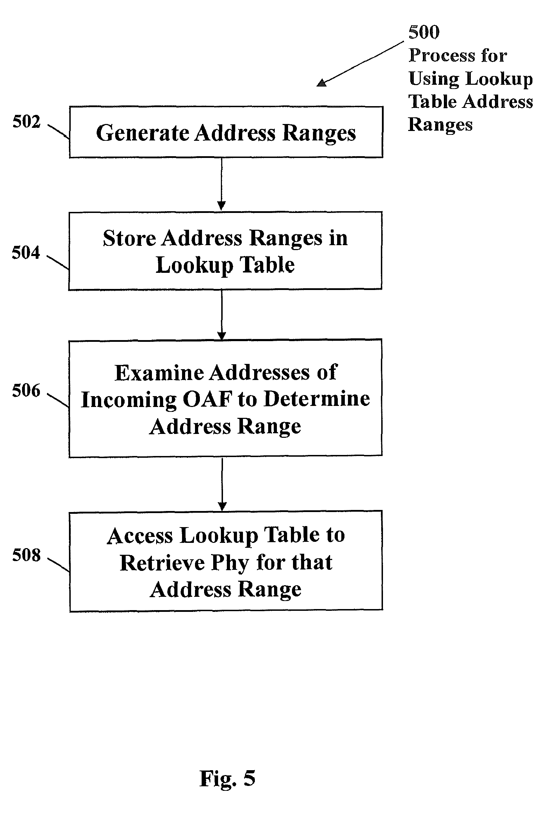

Figure 5 is a schematic block diagram illustrating a process 500 for using lookup table address ranges. At step 502, the address ranges are generated. The processor 125 in the expander may generate these address ranges. At step 504, the address ranges are stored in the lookup table, such as lookup table 126 of Figure 1. At step 506, the addresses of the incoming OAF are examined by processor 125 to determine what range the addresses of the OAF fall into. At step 508, the lookup table 126 is accessed to retrieve the physical address for that particular address range.

Implementation of range searches can be accomplished in several different ways. One manner of performing searches for ranges of addresses is to use a ternary content addressable memory 602, which provides a mechanism for performing a lookup based on a reduced number of bits in the SAS address. The reduced number of bits automatically provides a range of addresses.

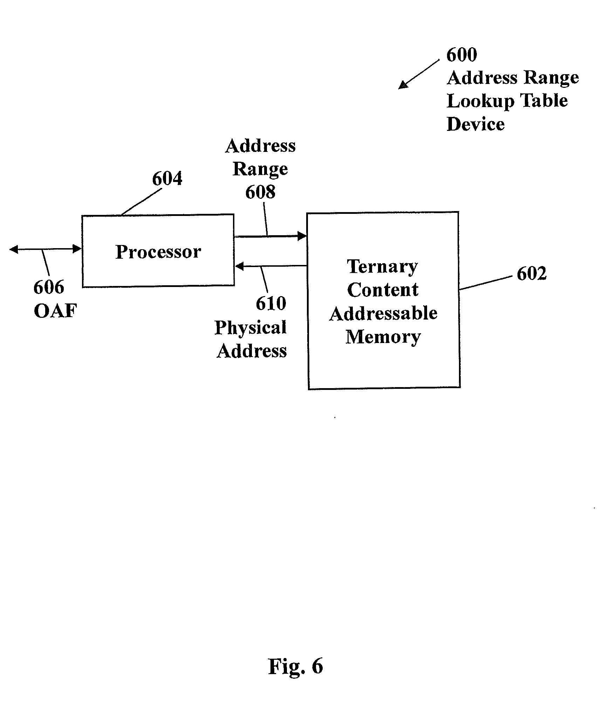

Figure 6 is a schematic block diagram illustrating an address range lookup table device 600. As illustrated in Figure 6, a ternary content addressable memory 602 is used to provide a lookup of address ranges. An OAF 606 is received by processor 604, which processes the OAF to determine an address range. The address range 608 is generated and applied to the ternary content addressable memory 602. The ternary content addressable memory 602 generates a physical address 610, which is provided to the processor 604.

Another approach is to use a standard content addressable memory and expander hardware logic that performs an SAS address lookup. In other words, logic can be added to the processor chip, or a state machine could be used to perform address range lookups in the content addressable memory. Further, manufacturers of SAS devices can provide facilities to the drives and other devices that are able to make efficient use of SAS address ranges based upon routing mechanisms in the topology of the storage access system. For example, when purchased in bulk quantities, SAS devices from some manufacturers come with consecutive SAS addresses. This process is equally applicable to SAS expanders, as well as SAS initiators with multiple physical addresses.

As explained above, SAS expanders typically employ content addressable memories to store SAS addresses of end devices in the SAS topology. The content addressable memory is used by the expander hardware to lookup the SAS address of the destination in the incoming open address frame (OAF) and the physical address on which the OAF needs to be routed. The content addressable memory (Table 126 of Figure 1) is typically populated under software control by running a SAS discovery routine. The number of end devices that can be connected in a SAS topology is therefore limited by the CAM size of the expander. The use of a software assisted lookup table will not limit the number of end devices, since the CAM size (Table 126) no longer remains the limiting factor for the size of the topology that the expander can support.

In accordance with one embodiment of the invention, software assisted SAS address lookup features are implemented that can also be automated in hardware. As such, it is possible to keep the frequently accessed SAS address entries in the content addressable memory. Software can then be used to provide additional lookup data when the content addressable memory lookup for a SAS address fails. In this manner, the expander can cater to the frequently used addresses and cater to a larger number of SAS addresses than can be supported by the content addressable memory by using a software lookup routine. Accordingly, the number of end devices that can be connected in the topology of a storage system is not limited by the content addressable memory size. Further, it is possible to implement higher level topology validation and recovery algorithms in software using this technique. At least a portion of these techniques can be automated in hardware to speed the lookup process. In addition, it is possible to profile the input/output functions flowing through the expander using this feature. Also, virtual targets and proxy targets can be established using the various embodiments of the invention.

In accordance with one embodiment, the expander software, as part of the discovery process, populates the routing table or content addressable memory 126 of the expander 104. The discovery routine in the expander software, in accordance with one embodiment, maintains the entire topology discovery information in RAM 127 since the routing table 126 is not able to hold all of the addresses for the end devices. In that case, a portion of the addresses are stored in the routing table (CAM) 126. When the expander hardware detects that there is not an address match for a destination SAS address of the open address frame (OAF), the expander hardware may generate an interrupt or other control function indicating the condition to the software. Status information provided to the software may include the destination SAS address that failed in the content addressable memory lookup. Alternatively, the entire contents of the open address frame can be provided for advanced analysis by the software.

The software, upon receiving an interrupt or other control signal that indicates the address match failure, attempts to resolve the failure in the address match by performing a lookup or comparison of the addresses in the discovery information that is stored remotely in RAM 127 from the processing chip 125 on expander 104. If a match is found using the software lookup techniques, one of two different approaches can be used to provide the match information to the expander hardware. In the first approach, the software can provide the physical address information indicating the target to which the OAF needs to be routed. Upon acknowledging the interrupt, the hardware can then utilize the physical address route provided by the software to route the OAF. In accordance with the second approach, the software can use a least recently used process to replace existing content addressable memory entries in table 126 with the new addresses provided by the software. The hardware then updates the least recently used tag in the content addressable memory 126. Upon acknowledging the interrupt, the hardware can reinitiate the content addressable memory lookup and a match will be found as a result of the address information newly added to the content addressable memory by the software. The hardware can then route the OAF on the indicated outbound physical address.

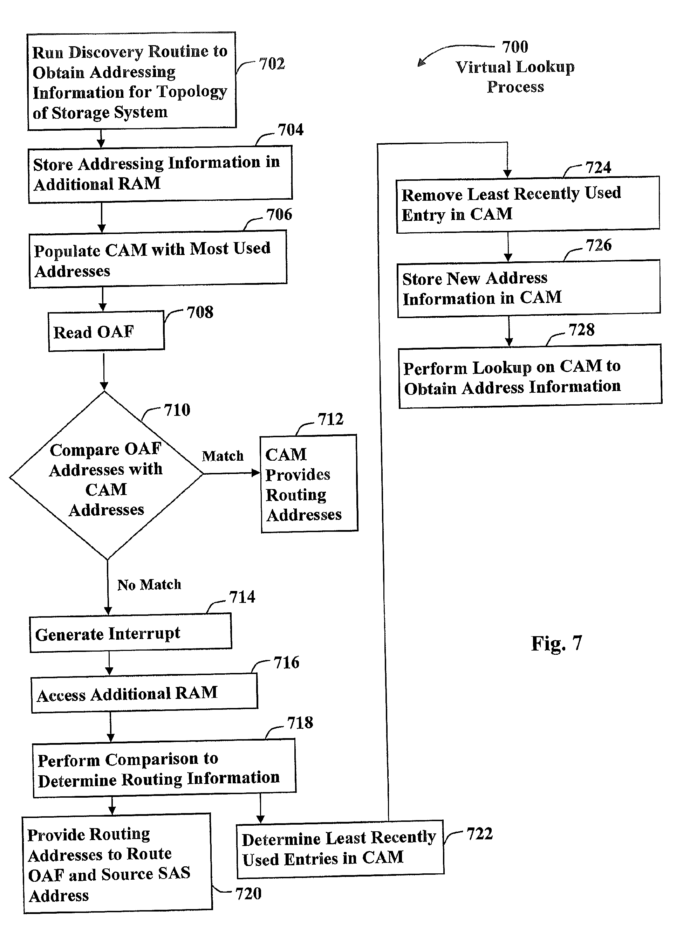

Figure 7 is a schematic block diagram of a process 700 for virtual lookup of addresses in an additional RAM 127. At step 702, a discovery routine is run by the expander to obtain address information for the entire topology of the storage system, such as the storage system illustrated in Figure 1. At step 704, the addressing information that was obtained from the discovery routine is stored in an additional RAM 127 in expander 104 of Figure 1. At step 706, CAM 126 is populated with the most used addresses. In other words, the addresses that have been most recently used by expander 104 are stored in the table 126 of Figure 1. At step 708, the expander 104 reads the OAF request. At step 710, the OAF addresses are compared with the addresses that are stored in the CAM table 126. If there is a match, CAM 126 provides the routing addresses to expander 104, at step 712. If there is no match, an interrupt is generated by the expander 104, at step 714. At step 716, additional RAM 127 is accessed by the processor in expander 104. At step 718, a comparison is performed to determine if the routing information is stored in RAM 127. At this point, one of two different alternative processes can be used. In accordance with one embodiment, at step 720, the routing addresses are provided to route the OAF to the proper destination. In accordance with another embodiment, at step 722, the least recently used entries in the routing table 126 are determined. At step 724, the least recently used entries in the routing table 126 are removed from the routing table. At step 726, the new address information retrieved from the RAM 127 is stored in the routing table 126. The processor 125 of expander 104 then proceeds to access the lookup table 126 to obtain the address information.

It is also possible to implement a combination of the two different approaches described above. In such a combination, the software can include logic to determine when to replace the existing content addressable memory entry to increase the performance of the routing of subsequent OAFs for the same destination end device.

Since the majority of the input/output requests in a larger topology tend to center around specific initiators and targets, at any given point in time, a software lookup in the software stored address data (content addressable memory miss-hit) will result in the new SAS address being cached in the content addressable memory. The performance penalty for performing the software lookup, as a result, is not likely to therefore be repetitive in nature. To further optimize the process described above, when a software address lookup occurs, the software may also provide the source SAS address. If the source SAS address belongs to a serial synchronous port (SSP) initiator and the SAS address is not stored in the content addressable memory, the source and destination SAS address can both be stored in the content addressable memory 126 to ensure that when the target attempts to open a connection back to the initiator, the destination SAS address is already present in the content addressable memory, to avoid an additional software lookup. Of course, these processes can also be implemented in hardware in a manner similar to a cache controller.

Caching of the content addressable memory information provided by the discovery routine in a hardware implementation would improve the performance of the system over a software lookup routine, as described above. In accordance with this alternative embodiment, the software discovery routine performs a topology discovery analysis and creates a complete routing table that is stored in RAM. Of course, a limiting factor in a hardware implementation is the size of the RAM required to store all of the routing table information, which may be on the order of a magnitude bigger than the content addressable memory on the processing chip of the expander. In the hardware implementation, the processes described above can be performed in the same manner as a software lookup. Additionally, with a software lookup, it is possible to proxy the end device in the expander by routing the OAF to the expander's internal SSP target virtual physical address. The software can then provision the bandwidth for certain initiators and targets to ensure certain quality of service.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of reducing the number of entries in a lookup table of an expander that is used in a serial attached SCSI storage system to provide routing addresses in response to an open address frame request for data comprising:
providing routing information in said open address frame request comprising:
source expander identification;
source physical address information;
destination expander identification; and,
destination physical address information;
using said routing information in said lookup table to route data between an initiator and a target.

2. The method of claim 1 wherein said source expander identification comprises a source expander physical address.

3. The method of claim 2 wherein said destination expander identification comprises a destination expander physical address.

4. A method of reducing the number of entries in a lookup table of an expander that is used in a serial attached SCSI storage system to provide routing addresses in response to an open address frame request for data comprising:
providing routing information in said open address frame request comprising:
source expander address information; and,
destination expander address information;
using said routing information in said lookup table to route data between an initiator and a target.

5. The method of claim 4 wherein said source expander address information comprises a source expander physical address.

6. The method of claim 5 wherein said destination expander information comprises a destination expander physical address.

7. The method of claim 3 or claim 6 wherein said process of using said routing information in said lookup table to route data between an initiator and a target comprises:
routing information in a content addressable memory lookup table to route data between an initiator and a target.

8. The method of claim 1 or claim 4 wherein said process of providing routing information in an open address frame request comprises:
providing routing information in a more compatible feature field of said open address frame request.

9. A process of reducing the number of entries in a lookup table of an expander that is used in a serial attached SCSI storage system that has a given topology to provide routing addresses in response to an open address frame request for data comprising:
generating address ranges for physical addresses of devices that exist in said topology of said storage system;
storing said address ranges in a lookup table;
examining addresses of said open address frame request to determine address range information of said addresses of said open address frame request;
using said address range information of said addresses of said open address frame request to retrieve a physical layer index for routing to said devices.

10. The process of claim 9 wherein said process of storing said address ranges in a lookup table comprises:
storing said address ranges in a ternary content addressable memory.

11. The process of claim 10 further comprising:
using a process in said expander to generate said address ranges.

12. A method of reducing the number of entries in a lookup table of an expander that is used in a serial attached SCSI storage system that has a given topology to provide routing addresses in response to an open address frame request for data comprising:
running a discovery routine to obtain said routing addresses for said topology of said storage system;
storing said routing addresses in additional RAM;
populating a lookup table with said routing addresses that are most recently used;
reading said open address frame request;
comparing address information contained in said open address frame request with said routing addresses stored in said lookup table;
providing said routing addresses for routing said open address frame request when said routing addresses stored in said lookup table match said address information contained in said open address frame request;
accessing said additional RAM when said routing addresses stored in said lookup table do not match said address information contained in said open address frame request;
comparing said address information contained in said open address frame request with said routing addresses stored in said additional RAM;
providing said routing addresses for routing said open address frame request when said routing addresses stored in said additional RAM match said address information contained in said open address frame request.

13. The method of claim 12 wherein said process of providing said routing addresses when said routing addresses stored in said additional RAM match said address information contained in said open address frame request further comprises:
determining a least recently used entry in said lookup table;
removing said least recently used entry in said lookup table;
storing said routing addresses in said lookup table;
comparing address information contained in said open address frame request with said routing addresses stored in said lookup table after storing said routing addresses in said lookup table.

14. The method of claim 12 wherein said process of populating a lookup table with said routing addresses that are most recently used comprises:
populating a content addressable memory with said routing addresses that are most recently used.
